# EUROPEAN PATENT APPLICATION

(11) **EP 4 845 177 A1**
(43) Date of publication of application: **25.11.2026**
(21) Application number: 25212205.6
(22) Date of filing: 30.10.2025
(51) Int. Cl.: H04N 25/585, H04N 23/67, H04N 25/59, H04N 25/616, H04N 25/704, H04N 25/77, H04N 25/771, H04N 25/778, H04N 25/78, H10F 39/18

(54) **IMAGE SENSING DEVICE**

(30) Priority: 23.05.2025 KR 20250067629
(71) Applicant: SK hynix Inc., Bubal-eub Icheon-si Gyeonggi-do 17336 (KR)
(72) Inventor: PARK, Han Sol, 17336 Icheon-si (KR); KIM, Seung Hyun, 17336 Icheon-si (KR); KIM, Jeong Hoon, 17336 Icheon-si (KR); SHIN, Jung Soon, 17336 Icheon-si (KR); OH, Jae Hyuk, 17336 Icheon-si (KR); JEON, Jae Hwan, 17336 Icheon-si (KR); YUN, Gun Hee, 17336 Icheon-si (KR)
(74) Representative: Isarpatent

(57) **Abstract**

An image sensing device for generating a high dynamic range (HDR) image is disclosed. The image sensing device includes a pixel array including a plurality of pixels and a plurality of phase-difference detection pixels and configured to convert an optical signal into an electrical signal to output a pixel signal; and a readout circuit configured to read out the pixel signal to output image data. In a first mode, the readout circuit reads out high conversion gain (HCG) phase-difference detection (HCG PD) data, high conversion gain (HCG) image data, and low conversion gain (LCG) image data based on first pixel signals received from the plurality of pixels. In a second mode, the readout circuit reads out low conversion gain (LCG) phase-difference detection (LCG PD) data and low conversion gain (LCG) image data based on second pixel signals received from the plurality of phase-difference detection pixels.

## Description

### CROSS-REFERENCE TO RELATED APPLICATION

This patent application claims the priority and benefits of Korean patent application No. 10-2025-0067629, filed on May 23, 2025, which is incorporated herein by reference in its entirety.

### TECHNICAL FIELD

The embodiments of the present disclosure generally relate to an image sensing device capable of generating a high dynamic range (HDR) image.

### BACKGROUND

An image sensing device is a device for capturing optical images by converting light into electrical signals using a photosensitive semiconductor material which reacts to light. With the development of automotive, medical, computer and communication industries, the demand for high-performance image sensing devices has been increasing in various fields such as smartphones, digital cameras, game machines, IoT (Internet of Things), robots, surveillance cameras and medical micro cameras.

To provide high-quality images, interest in HDR images is rapidly increasing, and various techniques capable of acquiring HDR images are being developed.

In addition, there is increasing demand for an image sensing device equipped with a phase-difference detection autofocus (PDAF) function that automatically focuses by detecting a phase difference between detected images. The PDAF function may be useful in a high-speed photographing mode or in a moving-image photographing mode (also called a video mode) that requires rapid focus adjustment.

### SUMMARY

Various embodiments of the present disclosure relate to an image sensing device that can acquire full-range phase detection autofocus (PDAF) data without degradation in speed and image quality during generation of high dynamic range (HDR) images.

In accordance with an embodiment of the present disclosure, an image sensing device may include a pixel array including a plurality of pixels and a plurality of phase-difference detection pixels (PDPXs) and configured to convert an optical signal into an electrical signal to output a pixel signal; and a readout circuit configured to read out the pixel signal to output image data. In a first mode, the readout circuit reads out high conversion gain (HCG) phase-difference detection (HCG PD) data, high conversion gain (HCG) image data, and low conversion gain (LCG) image data based on first pixel signals received from the plurality of pixels. In a second mode, the readout circuit reads out low conversion gain (LCG) phase-difference detection (LCG PD) data and low conversion gain (LCG) image data based on second pixel signals received from the plurality of phase-difference detection pixels (PDPXs).

In accordance with another embodiment of the present disclosure, an image sensing device may include a plurality of pixels configured to output first pixel signals; a plurality of phase-difference detection pixels configured to output second pixel signals; and a readout circuit configured to read out the first pixel signals and the second pixel signals to output image data. Each of the phase-difference detection pixels may include a plurality of photoelectric conversion elements configured to generate and accumulate photocharges corresponding to an intensity of incident light; a plurality of transfer transistors connected between a first floating diffusion region and the plurality of photoelectric conversion elements; a low conversion gain (LCG) transistor connected between the first floating diffusion region and a second floating diffusion region, and configured to operate by a low conversion gain (LCG) mode signal; and a pixel capacitor connected between the first floating diffusion region and a ground voltage terminal.

It is to be understood that both the foregoing general description and the following detailed description of the present disclosure are illustrative and descriptive and are intended to provide further description of the embodiments of the present disclosure as claimed.

### BRIEF DESCRIPTION OF THE DRAWINGS

The above and other features and beneficial aspects of the embodiments of the present disclosure will become readily apparent with reference to the following detailed description when considered in conjunction with the accompanying drawings.
FIG. 1 is a block diagram illustrating an imaging device according to an embodiment of the present disclosure.
FIG. 2 is a diagram illustrating a pixel array shown in FIG. 1 according to an embodiment of the present disclosure.
FIG. 3 is a detailed circuit diagram illustrating a pixel included in the pixel array shown in FIG. 2 according to an embodiment of the present disclosure.
FIG. 4 is a circuit diagram illustrating a phase-difference detection (PD) pixel included in the pixel array shown in FIG. 2 according to an embodiment of the present disclosure.
FIG. 5 is a timing diagram illustrating readout operations of pixels shown in FIGS. 3 and 4 according to an embodiment of the present disclosure.
FIG. 6 is a circuit diagram illustrating another pixel included in the pixel array shown in FIG. 2 according to an embodiment of the present disclosure.
FIG. 7 is a circuit diagram illustrating a phase-difference detection (PD) pixel included in the pixel array shown in FIG. 2 according to another embodiment of the present disclosure.
FIG. 8 is a timing diagram illustrating readout operations of pixels shown in FIGS. 6 and 7 according to another embodiment of the present disclosure.

### DETAILED DESCRIPTION

This present disclosure provides embodiments of an image sensing device capable of generating a high dynamic range (HDR) image that may be used in configurations to substantially address one or more technical or engineering issues and to mitigate limitations or disadvantages encountered in some other image sensing devices. Some embodiments of the present disclosure relate to an image sensing device that can acquire full-range phase detection autofocus (PDAF) data without degradation in speed and image quality during generation of high dynamic range (HDR) images. In recognition of the issues above, the embodiments of the present disclosure provide the image sensing device that can acquire full-range phase detection autofocus (PDAF) data without degradation in speed and image quality.

Reference will now be made in detail to some embodiments of the present disclosure, examples of which are illustrated in the accompanying drawings. Wherever possible, the same reference numbers will be used throughout the drawings to refer to the same or like parts. While the embodiments of the present disclosure are susceptible to various modifications and alternative forms, specific embodiments thereof are shown in the drawings. However, the embodiments of the present disclosure should not be construed as being limited to the embodiments set forth herein.

Various embodiments will be described with reference to the accompanying drawings. However, it should be understood that the embodiments are not limited to specific embodiments, but include various modifications, equivalents and/or alternatives of the embodiments. The embodiments of the present disclosure may provide a variety of advantageous effects capable of being directly or indirectly recognized by one of ordinary skill in the art.

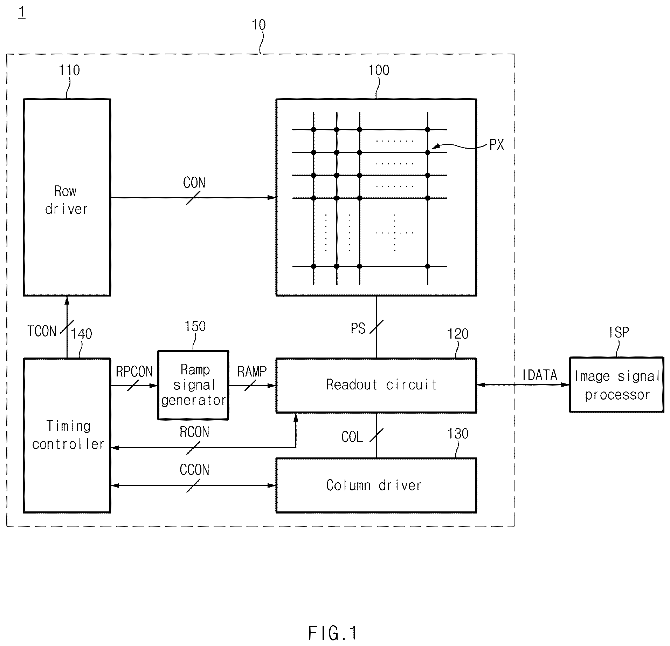

FIG. 1 is a block diagram illustrating an imaging device 1 according to embodiments of the present disclosure.

Referring to FIG. 1, the imaging device 1 may refer to a device, for example, a digital still camera for photographing still images or a digital video camera for photographing moving images. For example, the imaging device 1 may be implemented as a Digital Single Lens Reflex (DSLR) camera, a mirrorless camera, or a smartphone, and others. The imaging device 1 may include a device having both a lens and an image pickup element such that the device can capture (or photograph) a target object and can thus create an image of the target object.

The imaging device 1 may include an image sensing device 10 and an image signal processor (ISP).

The image sensing device 10 may be a complementary metal oxide semiconductor image sensor (CIS) for converting an incident light into an electrical signal. The image sensing device 10 may include a pixel array 100, a row driver 110, a readout circuit 120, a column driver 130, a timing controller 140, and a ramp signal generator 150. The components of the image sensing device 10 illustrated in FIG. 1 are discussed by way of illustration, and the embodiments may encompass numerous other changes, substitutions, variations, alterations, and modifications.

The pixel array 100 may include a plurality of imaging pixels (PXs) arranged in a two-dimensional (2D) pixel array including rows and columns. The plurality of imaging pixels (PXs) may be consecutively arranged in a column direction and a row direction. In another embodiment, the plurality of imaging pixels (PXs) may be arranged in a three-dimensional (3D) pixel array. The plurality of imaging pixels may convert an optical signal into an electrical signal on a unit pixel basis or a pixel group basis, where pixels in a pixel group share at least certain internal circuitry.

The pixel array 100 may receive pixel control signals (CON), including a selection signal, a reset signal, a conversion gain control signal, and a transfer signal, from the row driver 110. Upon receiving the pixel control signals (CON), corresponding imaging pixels in the pixel array 100 may be activated to perform the operations corresponding to the selection signal, the reset signal, the conversion gain control signal, and the transfer signal. Each of the pixels (PXs) may generate photocharges corresponding to the intensity (or illuminance) of incident light, and may generate an electrical signal having a magnitude corresponding to the amount of generated photocharges, thereby detecting the incident light. A pixel signal (PS) generated by some of the plurality of pixels (PXs) may be used as a signal for autofocus.

The row driver 110 may activate the pixel array 100 to perform certain operations on the imaging pixels in the corresponding row based on commands and control signals (TCON) provided by the timing controller 140. In some embodiments, the row driver 110 may select one or more imaging pixels arranged in one or more rows of the pixel array 100. The row driver 110 may generate a row selection signal to select one or more rows among the plurality of rows.

The row driver 110 may sequentially enable the pixel reset signal for resetting imaging pixels (PXs) corresponding to at least one selected row, and the transfer signal for the pixels (PXs) corresponding to the at least one selected row. Thus, a reference signal and an image signal, which are analog signals generated by each of the imaging pixels (PXs) of the selected row, may be sequentially transferred to the readout circuit 120. The reference signal may be an electrical signal that is provided to the readout circuit 120 when a sensing node of an imaging pixel (e.g., a floating diffusion region) is reset, and the image signal may be an electrical signal that is provided to the readout circuit 120 when photocharges generated by the imaging pixel are accumulated in the sensing node. The reference signal indicating unique reset noise of each pixel and the image signal indicating the intensity of incident light may be generically called a pixel signal as necessary.

The image sensing device 10 may use the correlated double sampling (CDS) to remove undesired offset values of pixels known as the fixed pattern noise by sampling a pixel signal (PS) twice to remove the difference between these two samples. In an embodiment, the correlated double sampling (CDS) may remove the undesired offset value of pixels by comparing pixel output voltages obtained before and after photocharges generated by incident light are accumulated in the sensing node so that only pixel output voltages based on the incident light can be measured.

In some embodiments of the present disclosure, the readout circuit 120 may sequentially sample and hold voltage levels of the reference signal and the image signal, which are provided to each of a plurality of column lines from the pixel array 100, based on the control signal (RCON) received from the timing controller 140. That is, the readout circuit 120 may sample and hold the voltage levels of the reference signal and the image signal which correspond to each of the columns of the pixel array 100. That is, an analog-to-digital converter (ADC) included in the readout circuit 120 may sample and hold the pixel signal for each column upon receiving the pixel signal from each column line of the pixel array 100, may convert the resultant signal into digital signals (IDATA), and may output the digital signals (IDATA). In some embodiments, the ADC may be implemented as a ramp-compare type ADC. The ramp-compare type ADC may include a comparator circuit for comparing the analog pixel signal with a ramp signal that ramps up or down according to time, and a timer (or counter) for performing counting until a voltage of the ramp signal matches the analog pixel signal.

Image data (IDATA) generated by the readout circuit 120 may have at least two different sensitivities. Here, the sensitivity may mean an increase in amount of image data IDATA (or an increase amount of a response) with respect to an increase in amount of the intensity of incident light. That is, as the sensitivity increases, the amount of increase in image data (IDATA) in response to an increase in the intensity of incident light increases. As the sensitivity decreases, the amount of increase in image data (IDATA) in response to an increase in the intensity of incident light decreases.

Here, the sensitivity may be determined by the analog gain. The analog gain may refer to a ratio of a voltage level of an analog pixel signal (PS) varying depending on the intensity of the incident light to the size of the image data (IDATA). For example, the analog gain may be controlled by adjusting a slope of a ramp signal applied to the ADC, but the embodiments of the present disclosure are not limited thereto.

The column driver 130 may select a column of the readout circuit 120 upon receiving a control signal (CCON) from the timing controller 140. The column driver 130 may temporarily store image data (IDATA) for the selected column of the readout circuit 120, and may control the readout circuit 120 to sequentially output the image data (IDATA), which are temporarily stored in the selected column of the readout circuit 120. In some embodiments, upon receiving an address signal from the timing controller 140, the column driver 130 may generate a column selection signal based on the address signal, and may select a column of the readout circuit 120.

The timing controller 140 may control operations of at least one of the row driver 110, the readout circuit 120, and the column driver 130. The timing controller 140 may provide the row driver 110, the readout circuit 120, and the column driver 130 with a clock signal required for the operations of the respective components of the image sensing device 10, a control signal for timing control, and address signals for selecting a row or column.

The ramp signal generator 150 may operate according to a ramp control signal (RPCON) received from the timing controller 140. The ramp signal generator 150 may generate a ramp signal (RAMP) required for analog-to-digital conversion (ADC) operation of the readout circuit 120, and may supply the ramp signal (RAMP) to the readout circuit 120.

The image signal processor (ISP) may perform image processing of image data received from the image sensing device 10. The image signal processor (ISP) may reduce noise of image data, and may perform various types of image signal processing (e.g. interpolation, synthesis, gamma correction, color filter array interpolation, color matrix, color correction, color enhancement, lens distortion correction, etc.) for image-quality improvement of the image data.

In addition, the image signal processor (ISP) may compress image data that has been created by execution of image signal processing for image-quality improvement, such that the image signal processor (ISP) can create an image file using the compressed image data. Alternatively, the image signal processor (ISP) may recover image data from the image file. In this case, the scheme for compressing such image data may be a reversible format or an irreversible format. As a representative example of such compression format, in the case of using a still image, Joint Photographic Experts Group (JPEG) format, JPEG 2000 format, or the like can be used. In addition, in the case of using moving images, a plurality of frames can be compressed according to Moving Picture Experts Group (MPEG) standards such that moving image files can be created. For example, the image files may be created according to Exchangeable image file format (Exif) standards.

The image signal processor (ISP) may generate an HDR image by synthesizing at least two images having different sensitivities. For example, the image sensing device 10 may output a low-sensitivity image generated from a low-sensitivity pixel with a relatively lower sensitivity and a high-sensitivity image generated from a high-sensitivity pixel with a relatively higher sensitivity. The image signal processor (ISP) may combine the low-sensitivity image and the high-sensitivity image, resulting in formation of an HDR image. Here, the low-sensitivity and the high-sensitivity may correspond to relative concepts, the image sensing device 10 may generate image data (IDATA) having at least N different sensitivities, where N is an integer of 2 or more.

The image signal processor (ISP) may perform HDR processing on image data (IDATA). Here, HDR processing may include linearization processing and Dynamic Range Compression (DRC) processing. DRC processing may include tone mapping (e.g., gamma correction). Depending on such tone mapping, relatively bright areas of the image may be corrected to be dark and relatively dark areas of the image may be corrected to be bright. When HDR processing is performed on the merged image and at least one image, an HDR image with an increased dynamic range and improved SNR (signal to noise ratio) may be generated. Various image processes described above may be performed on the HDR image. However, the embodiments of the present disclosure are not limited thereto, and at least one of the various image processes for accurate and clear expression of images may also be performed during HDR processing.

The image signal processor (ISP) may transmit the ISP image data to a host device (not shown). The host device (not shown) may be a processor (e.g. an application processor) for processing the ISP image data received from the image signal processor (ISP), a memory (e.g. a non-volatile memory) for storing the ISP image data, or a display device (e.g. a liquid crystal display LCD) for visually displaying the ISP image data.

In addition, the image signal processor (ISP) may transmit a control signal for controlling operations (e.g. whether or not to operate, an operation timing, an operation mode, etc.) of the image sensing device 10 to the image sensing device 10.

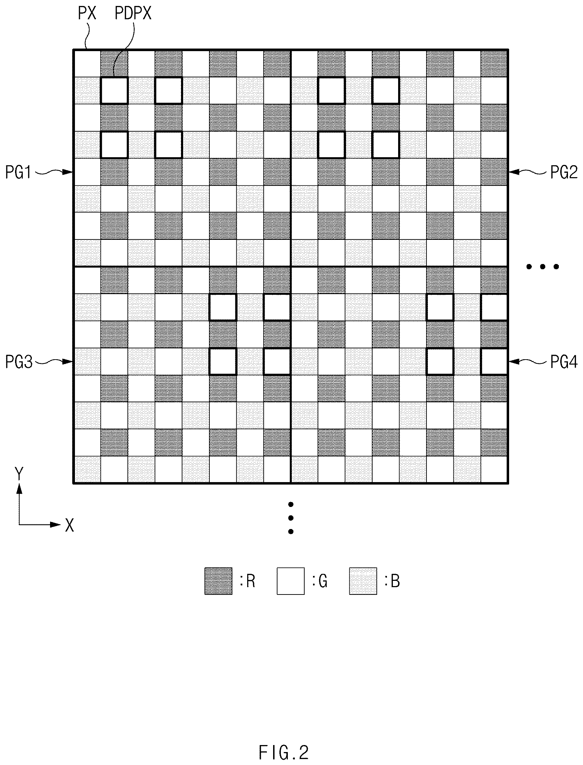

FIG. 2 is a diagram illustrating the pixel array shown in FIG. 1 according to an embodiment of the present disclosure.

Referring to FIG. 2, the pixel array 100 may include a plurality of pixel groups (PG1~PG4). The pixel group (PG1) and the pixel group (PG4) may be arranged in a diagonal direction, and the pixel group (PG2) and the pixel group (PG3) may be arranged in a diagonal direction.

The embodiment of FIG. 2 illustrates the pixel array 100 having a pattern in which pixel groups (PG1~PG4) including (N × N) pixels, where "N" is a natural number greater than or equal to 2, are repeatedly arranged in a row direction (i.e., a first direction or X-axis direction) and a column direction (i.e., a second direction or Y-axis direction).

For example, the pixel array 100 may include 256 pixels (PXs) arranged in an (16 × 16) matrix structure in the row and column directions. 256 pixels (PXs) acting as a minimum unit of the pixel array 100 may be repeated in the row and column directions, without being limited thereto.

Colors (i.e., red R, green G (for example, Gr and/or Gb), blue B) corresponding to each of the pixel groups (PG1~PG4) may be arranged in a Bayer pattern. For example, the pixel group (PG1) may include a total of 64 pixels (PXs) arranged in a (8 × 8) matrix having color filters arranged in a Bayer pattern. The pixel group (PG2) may include a total of 64 pixels (PXs) arranged in a (8 × 8) matrix having color filters arranged in a Bayer pattern. The pixel group (PG3) may include a total of 64 pixels (PXs) arranged in a (8 × 8) matrix having color filters arranged in a Bayer pattern. The pixel group (PG4) may include a total of 64pixels (PXs) arranged in a (8 × 8) matrix having color filters arranged in a Bayer pattern.

In each of the pixel groups (PG1~ PG4), a preset number (a preset ratio) of pixels of pixels may be phase-difference detection pixels (PDPX). The number of phase-difference detection pixels (PDPX) may be less than the number of pixels (PX).

For example, in each of the pixel groups (PG1~PG4), 4 pixels among a total of 64 pixels (PXs) may be phase-difference detection pixels (PDPX). The phase-difference detection pixels (PDPX) may be pixels having green color filters arranged adjacent to each other in the row and column directions.

The phase-difference detection pixels (PDPX) may be used to capture a target object and generate phase signals for autofocus. The phase signals may include information about the positions of the phase-difference detection pixels (PDPXs) in the pixel array 100. The autofocus operation through phase detection may refer to an operation of detecting a phase difference between a first image generated by some phase-difference detection pixels (PDPXs) and a second image generated by other phase-difference detection pixels (PDPXs), calculating a movement distance of the lens from the detected phase difference, adjusting a position of the lens based on the calculated distance, and thus obtaining an in-focus image.

However, the pixel array 100 illustrated in FIG. 2 is an embodiment, and other embodiments are also possible, and it should be noted that a pixel array 100 in which normal pixels (PXs) and phase-difference detection pixels (PDPXs) are arranged can also embodied according to various arrangement methods.

The embodiment of the present disclosure has disclosed that the pixel array 100 has red, green, and blue filters, but the embodiment of the present disclosure is not limited thereto, and at least one of various colors may be sensed by a unit color pixel. In another embodiment, the pixels (PXs) may include color filters such as yellow, cyan, and magenta.

Although the pixel array 100 includes four pixel groups (PG1~PG4) for convenience of description, the number of pixel groups according to the present embodiment is not limited thereto.

In addition, according to the embodiment of the present disclosure, the pixel array 100 is illustrated as being arranged in a Bayer pattern. However, the arrangement of the pixels (PX) can be implemented in various ways, and the pattern of the pixel array 100 is not limited thereto.

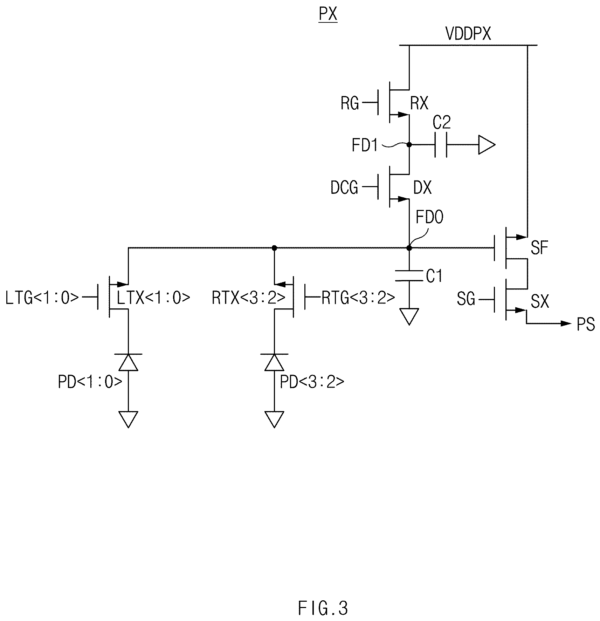

FIG. 3 is a detailed circuit diagram illustrating a pixel (PX) included in the pixel array 100 shown in FIG. 2 according to an embodiment of the present disclosure.

Referring to FIG. 3, the pixel (PX) may be any one of a plurality of pixels included in the pixel array 100. Although FIG. 3 illustrates only one pixel (PX) for convenience of description, other pixels may have substantially the same structure and operation as those of the pixel (PX).

The pixel (PX) may include a plurality of photoelectric conversion elements (PD<3:0>), transfer transistors (TX) (e.g., LTX<1:0>, RTX<3:2>), a reset transistor (RX), a conversion gain transistor (DX), a pixel capacitor (C1), a conversion gain capacitor (C2), a source follower transistor (SF), and a selection transistor (SX). The circuit structure of FIG. 3 is an embodiment, and the pixel (PX) according to the present disclosure is not limited to the connection structure of FIG. 3.

In FIG. 3, the pixel (PX) may be a shared pixel having a plurality of photoelectric conversion elements (PD<3:0>). In this case, the plurality of transfer transistors (LTX<1:0>, RTX<3:2>) may be provided to correspond to the plurality of photoelectric conversion elements (PD<3:0>).

The reset transistor (RX), the conversion gain transistor (DX), the pixel capacitor (C1), the conversion gain capacitor (C2), the source follower transistor (SF), and the selection transistor (SX) may be shared by the pixels. The reset transistor (RX), the conversion gain transistor (DX), the pixel capacitor (C1), the conversion gain capacitor (C2), the source follower transistor (SF), and selection transistor (SX) may be distributed to and arranged in each of the pixels, and arrangement positions thereof may be changed in various ways and are not limited thereto.

Each of the photoelectric conversion elements (PD<3:0>) may generate and accumulate photocharges corresponding to the intensity of incident light. For example, each of the photoelectric conversion elements (PD<3:0>) may be implemented as a photodiode, a phototransistor, a photogate, a pinned photodiode, or a combination thereof.

The plurality of transfer transistors (LTX, RTX) may be connected between the plurality of photoelectric conversion elements (PD<3:0>) and a floating diffusion region (FDO). The plurality of transfer transistors (LTX, RTX) may be turned on or off in response to the plurality of transfer signals (LTG<1:0>, RTG<3:2>). The plurality of transfer transistors (LTX, RTX) may be turned on by transfer signals (LTG<1:0>, RTG<3:2>) of a logic high level to transfer photocharges accumulated in the plurality of photoelectric conversion elements (PD<3:0>) to the floating diffusion region (FDO).

For example, transfer signals (LTG<1:0>) may turn on the transfer transistors (LTX) to discharge charges accumulated in photoelectric conversion elements (PD<1:0>) to the floating diffusion region (FDO), or may turn off the transfer transistors (LTX) to control the photoelectric conversion elements (PD<1:0>) to accumulate charges therein.

The reset transistor (RX) may be connected between a power-supply voltage (VDDPX) terminal and a floating diffusion region (FD1). The reset transistor (RX) may be turned on in response to a logic high-level reset signal (RG). When the reset transistor (RX) is turned on, charges accumulated in the floating diffusion region (FD1) may be discharged, and the floating diffusion region (FD1) may be reset by the power-supply voltage (VDDPX).

The floating diffusion region (FDO) may accumulate photocharges received from the transfer transistors (LTX, RTX). The plurality of photoelectric conversion elements (PD<3:0>) may share the floating diffusion region (FDO). That is, the plurality of pixels (PX) within one pixel group may share the floating diffusion region (FDO). The source follower transistor (SF) may be controlled based on the amount of photocharges accumulated in the floating diffusion region (FDO).

The floating diffusion region (FDO) may be connected to the pixel capacitor (C1) connected to a ground voltage terminal. For example, the floating diffusion region (FDO) may be a region that is doped with second conductive impurities (e.g., N-type impurities) in a substrate (e.g., a P-type substrate) including first conductive impurities. In this case, the substrate and the impurity doped region can be modeled as the pixel capacitor (C1) acting as a junction capacitor. The floating diffusion region (FD) may be referred to as a sensing node.

The conversion gain transistor (DX) may connect the floating diffusion region (FD1) to the floating diffusion region (FDO). The conversion gain transistor (DX) may be driven by a conversion gain control signal (DCG). The conversion gain capacitor (C2) may be connected between the floating diffusion region (FD1) and a ground voltage terminal. The conversion gain capacitor (C2) may store charges received from the floating diffusion region (FD1).

When the conversion gain transistor (DX) is turned off, the floating diffusion region (FDO) may have capacitance (i.e., first capacitance) corresponding to capacitance of the pixel capacitor (C1). When the conversion gain transistor (DX) is turned on, the floating diffusion region (FDO) may have capacitance (i.e., second capacitance) corresponding to the sum of the capacitance of the pixel capacitor (C1) and the capacitance of the conversion gain capacitor (C2). That is, the conversion gain transistor (DX) may control the capacitance of the floating diffusion region (FDO).

The conversion gain may be determined by capacitance of the floating diffusion region (FDO) and may be inversely proportional to the magnitude of the capacitance. As the capacitance of the floating diffusion region (FDO) increases, the conversion gain decreases, and as the capacitance decreases, the conversion gain increases. In this case, the conversion gain may refer to a ratio at which charges accumulated in the floating diffusion region (FDO) are converted into a voltage. For example, the conversion gain may be a value obtained by dividing the voltage of the floating diffusion region (FDO) by the charges.

The pixel (PX) may operate in a low conversion gain (LCG) mode in which the floating diffusion region (FDO) has large capacitance or a high conversion gain (HCG) mode in which the floating diffusion region (FDO) has a small capacitance. The HCG mode may increase noise performance by increasing the sensitivity in an illuminance range (i.e., a low-illuminance range) where the intensity of the incident light is relatively low. The LCG mode may increase a full well capacity (FWC) in an illuminance range (i.e., a high-illuminance range) where the intensity of the incident light is relatively high. Here, FWC may refer to a maximum amount of photocharges that can be stored in a pixel.

The conversion gain when the conversion gain transistor (DX) is turned off may be higher than the conversion gain when the conversion gain transistor (DX) is turned on. Accordingly, the operation mode when the conversion gain transistor (DX) is turned off may be referred to as the high conversion gain (HCG) mode, and the operation mode when the conversion gain transistor (DX) is turned on may be referred to as the low conversion gain (LCG) mode.

The source follower transistor (SF) may be connected between the selection transistor (SX) and the power-supply voltage terminal (VDDPX), may amplify a change in electrical potential of the floating diffusion region (FD) that has received photocharges accumulated in the photoelectric conversion element (PD), and may transmit the amplified result to the selection transistor (SX). The source follower transistor (SF) may amplify potential changes in the floating diffusion region (FDO). That is, the source follower transistor (SF) may serve as a source follower buffer amplifier configured to generate a source-drain current in proportion to the amount of charges stored in the floating diffusion region (FDO). Here, the amount of charges of the floating diffusion region (FDO) is input to a gate electrode of the source follower transistor (SF).

The selection transistor (SX) may select a pixel group (PG) to be read out on a row-by-row basis. The selection transistor (SX) may be connected between a drive transistor (DX) and an output terminal of the pixel signal (PS). When the selection transistor (SX) is turned on by a selection signal (SG), an analog electrical signal output from the drive transistor (DX) may be output as the pixel signal (PS).

A plurality of transfer signals (LTG<1:0>, RTG<3:2>), a conversion gain control signal (DCG), a reset signal (RG), and a selection signal (SG) may be generated based on the row driver 110 or the timing controller 140 illustrated in FIG. 1.

In this case, a logic high level may refer to a voltage level for activating (e.g., turning on) a corresponding device (e.g., a transistor), and a logic low level may refer to a voltage level for deactivating (e.g., turning off) the corresponding device (e.g., a transistor).

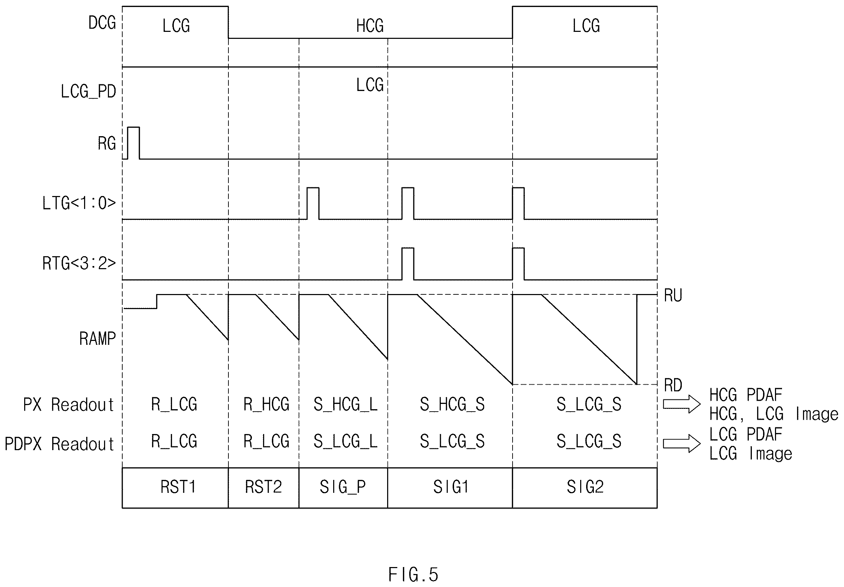

A method for operating the pixel (PX) including the above constituent elements will be described later in more detail with reference to FIG. 5.

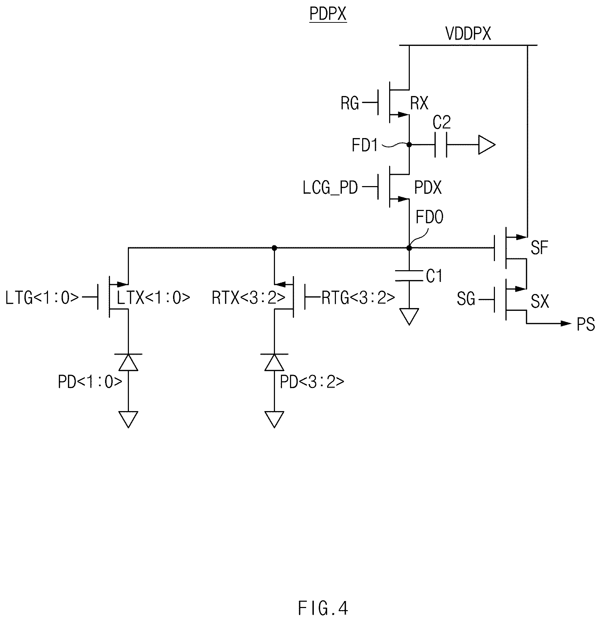

FIG. 4 is a circuit diagram illustrating a phase-difference detection (PDPX) pixel included in the pixel array 100 shown in FIG. 2 according to an embodiment of the present disclosure.

Referring to FIG. 4, a phase-difference detection pixel (PDPX) may be any one of a plurality of pixels included in the pixel array 100. Although FIG. 4 illustrates only one phase-difference detection pixel (PDPX) for convenience of description, other phase-difference detection pixels (PDPXs) may have substantially the same structure and operation principle as the phase-difference detection pixel (PDPX).

The phase-difference detection pixel (PDPX) may include a plurality of photoelectric conversion elements (PD<3:0>), transfer transistors (LTX, RTX), a reset transistor (RX), a low conversion gain (LCG) transistor (PDX), a conversion gain capacitor (C2), a pixel capacitor (C1), a source follower transistor (SF), and a selection transistor (SX). The circuit structure of FIG. 4 is an embodiment, and the embodiment of the phase-difference detection pixel (PDPX) is not limited to the connection structure of FIG. 4.

The embodiment of FIG. 4 illustrates only configurations different from those of FIG. 3 for convenience of description, and the same reference numerals as in FIG. 3 will be assigned to identical configurations, and as such redundant descriptions thereof will herein be omitted for brevity.

Whereas the pixel (PX) shown in FIG. 3 includes the conversion gain transistor (DX), the phase-difference detection pixel (PDPX) shown in FIG. 4 may include a low conversion gain (LCG) transistor (PDX) instead of the conversion gain transistor (DX).

The LCG transistor (PDX) may operate to read out low conversion gain phase-difference detection (LCG PD) data and LCG image data in the LCG mode. The low conversion gain transistor (PDX) may operate by an LCG mode signal (LCG_PD). In the LCG mode, the LCG mode signal (LCG_PD) is fixed at a first logic level (e.g., a logic high level) so that the LCG transistor (PDX) may remain turned on.

As described above, the image sensing device according to the present disclosure may assign pixels having a specific pattern and certain density to the pixel array 100 as phase-difference detection pixels (PDPXs), and may thus read out LCG phase-difference detection data and LCG image data in the LCG mode. As a result, the image sensing device according to the present disclosure can overcome structural limitations in which only HCG phase-difference detection (HCG PD) data can be obtained in the intra-scene dual conversion gain (iDCG) HDR mode.

A method for operating the phase-difference detection pixel (PDPX) including the above constituent elements will be described in more detail with reference to FIG. 5.

FIG. 5 is a timing diagram illustrating readout operations of pixels shown in FIGS. 3 and 4 according to an embodiment of the present disclosure.

In an embodiment of the present disclosure, within one frame in which the pixel array 100 receives light once (i.e., one exposure of the image sensing device 10) and is then scanned, the plurality of pixels (PXs) may operate sequentially in a high conversion gain (HCG) mode and a low conversion gain (LCG) mode during corresponding readout periods (or horizontal periods).

The pixel (PX) may operate in the LCG mode or the HCG mode depending on whether the conversion gain transistor (DX) is turned on or off. The pixel (PX) may operate in a dual conversion gain (DCG) mode, and the DCG mode may be determined by the on/off states of the conversion gain transistor (DX).

Accordingly, the image sensing device 10 may generate two image signals (i.e., a pixel signal generated in the HCG mode and a pixel signal generated in the LCG mode) within one frame period. The image sensing device 10 may provide two image data to the image signal processor (ISP). The image signal processor (ISP) may merge the two image data to generate a high dynamic range (HDR) image in which a bright region (i.e., a high-illuminance region) and a dark region (i.e., a low-illuminance region) are clearly rendered.

As described above, the dual conversion gain (DCG) within one frame may be referred to as an intra-scene dual conversion gain (iDCG), so that the terms "dual conversion gain" to be mentioned in the following description may refer to the intra-scene dual conversion gain (iDCG).

Referring to FIG. 5, the readout operation in the DCG mode may be performed while being divided into a readout operation in a first reset period (RST1), a readout operation in a second reset period (RST2), a readout operation in a phase-difference detection (PD) period (SIG_P), a readout operation in a first signal period (SIG1), and a readout operation in a second signal period (SIG2).

The readout operation periods of the pixel (PX) will hereinafter be described with reference to FIGS. 5 and 3 together. The first reset period (RST1) may be a period for reading out a reset signal (R_LCG) of the pixel (PX) operating in the LCG mode. The second reset period (RST2) may be a period for reading out a reset signal (R_HCG) of the pixel (PX) operating in the HCG mode. The phase-difference detection (PD) period (SIG_P) may be a period for reading out a phase-difference detection signal (S_HCG_L) of the pixel (PX) operating in the HCG mode. The first signal period (SIG1) may be a period for reading out an image signal (S_HCG_S) of the pixel (PX) operating in the HCG mode. The second signal period (SIG2) may be a period for reading out an image signal (S_LCG_S) of the pixel (PX) operating in the LCG mode.

In the first reset period (RST1), when the reset signal (RG) temporarily has a logic high level, a pixel signal (PS) corresponding to a voltage of the reset floating diffusion region (FDO) may be output from the pixel (PX) operating in the LCG mode. As the first reset period (RST1) begins, the ramp signal (RAMP) returns to a ramp upper limit value (RU), and after a predetermined time elapses, the ramp signal generator 150 may output a ramp signal (RAMP) having a negative slope. In the first reset period (RST1), the pixel signal (PS) (i.e., the reset signal (R_LCG) in the LCG mode) corresponding to the voltage of the reset floating diffusion regions (FD0, FD1) of the pixel (PX) operating in the LCG mode may be read out.

In the second reset period (RST2), when the DCG control signal (DCG) is at a logic low level and the conversion gain transistor (DX) is turned off, the floating diffusion region (FDO) may have a relatively small capacitance. A pixel signal (PS) corresponding to a voltage of the floating diffusion region (FDO) may be output from the pixel (PX) operating in the HCG mode. As the second reset period (RST2) begins, the ramp signal (RAMP) returns to a ramp upper limit value (RU), and after a predetermined time elapses, the ramp signal generator 150 may output a ramp signal (RAMP) having a negative slope. In the second reset period (RST2), the pixel signal (PS) (i.e., the reset signal (R_HCG) in the HCG mode) corresponding to the voltage of the reset floating diffusion region (FDO) of the pixel (PX) operating in the HCG mode may be read out.

In the phase-difference detection period (SIG_P), when some transfer signals (LTG<1:0>) among the plurality of transfer signals (LTG<1:0>, RTG<3:2>), transition to a logic high level, the transfer transistors (LTX) may be turned on. Accordingly, photocharges accumulated in some photoelectric conversion elements (PD<1:0>) corresponding to the transfer transistors (LTX) among the plurality of photoelectric conversion elements (PD<3:0>) may be transferred to the floating diffusion region (FDO).

By way of example, the "L" in "LTX" may refer to transfer transistors (LTX<1:0>) located at the left side among the plurality of transfer transistors. Although the present embodiment has disclosed that the transfer transistors (LTX<1:0>) located at the left side among the plurality of transfer transistors are used as transistors for phase-difference detection, other embodiments are also possible, and it should be noted that transfer transistors (RTX<3:2>) located at the right side may also be used as transistors for phase-difference detection.

Accordingly, the pixel signal (PS) corresponding to the floating diffusion region (FDO) in the HCG mode may be output to read out a phase-difference detection signal (S_HCG_L). HCG phase-difference detection (HCG PD) data (illustrated as "HCG PDAF" in FIG. 5) may be read out according to a value corresponding to a voltage difference (i.e., a signal component having no reset noise) between the phase-difference detection signal (S_HCG_L) and the reset signal (R_HCG).

In the first signal period (SIG1), since the conversion gain control signal (DCG) has a logic low level, the pixel (PX) in a state where the conversion gain transistor (DX) is turned off may operate in the HCG mode in which photocharges are converted into electrical signals with a relatively high conversion gain.

In the first signal period (SIG1), when the plurality of transfer signals (LTG<1:0>, RTG<3:2>) transitions to a logic high level, the plurality of transfer transistors (LTX, RTX) may be turned on. Accordingly, photocharges accumulated in the plurality of photoelectric conversion elements (PD<3:0>) may be transferred to the floating diffusion region (FDO), and the pixel signal (PS) corresponding to the floating diffusion region (FDO) may be output. As the first signal period (SIG1) begins, the ramp signal (RAMP) returns to a ramp upper limit value (RU), and after a predetermined time elapses, the ramp signal generator 150 may output a ramp signal (RAMP) having a negative slope. The ramp signal (RAMP) may decrease to a ramp lower limit value (RD).

Accordingly, in the first signal period (SIG1), an image signal (S_HCG_S) in the HCG mode may be read out. In the HCG mode, HCG image data (illustrated as "HCG image" in FIG. 5) may be read out based on a value corresponding to a voltage difference between the image signal (S_HCG_S) and the reset signal (R_HCG).

In the second signal period (SIG2), as the conversion gain control signal (DCG) has a logic high level, the pixel (PX) in a state where the conversion gain transistor (DX) is turned on may operate in the LCG mode in which photocharges are converted into electrical signals with a relatively low conversion gain.

In the second signal period (SIG2), when the plurality of transfer signals (LTG<1:0>, RTG<3:2>) transitions to a logic high level, the plurality of transfer transistors (LTX, RTX) may be turned on. Accordingly, photocharges accumulated in the plurality of photoelectric conversion elements (PD<3:0>) may be transferred to the floating diffusion region (FDO), and pixel signals (PS) corresponding to the floating diffusion regions (FD0, FD1) may be output.

Accordingly, in the second signal period (SIG2), an image signal (S_LCG_S) in the LCG mode may be read out. In the LCG mode, LCG image data (illustrated as "LCG image" in FIG. 5) may be read out based on a value corresponding to a voltage difference between the image signal (S_LCG_S) and the reset signal (R_LCG).

As described above, the readout circuit 120 may read out phase-difference detection (PD) data ("HCG PDAF") according to the HCG mode, HCG image data ("HCG image"), and LCG image data ("LCG image") during a readout period based on the pixel signal (PS) received from the pixel (PX) operating in the DCG mode.

A method for reading out full-range phase-difference detection autofocus (PDAF) data from the phase-difference detection pixel (PDPX) will hereinafter be described with reference to FIGS. 4 and 5. That is, within a single frame, the phase-difference detection pixel (PDPX) may operate in the LCG mode while the pixel (PX) operates in the DCG mode (i.e., in the HCG and LCG modes) as described above.

The readout period of the phase-difference detection pixel (PDPX) may be divided into a first reset period (RST1), a second reset period (RST2), a phase-difference detection (PD) period (SIG_P), a first signal period (SIG1), and a second signal period (SIG2). The first reset period (RST1) and the second reset period (RST2) may be periods for reading out the reset signal (R_LCG) of the phase-difference detection pixel (PDPX). The phase-difference detection (PD) period (SIG_P) may be a period for reading out a phase-difference detection (PD) signal (S_LCG_L) of the phase-difference detection pixel (PDPX). The first signal period (SIG1) and the second signal period (SIG2) may be periods for reading out an image signal (S_LCG_S) of the phase-difference detection pixel (PDPX).

In the phase-difference detection pixel (PDPX), the LCG mode signal (LCG_PD) may be fixed at a logic high level so that the LCG transistor (PDX) can remain turned on.

In the first reset period (RST1) and the second reset period (RST2), a pixel signal (PS) corresponding to the voltage of the floating diffusion region (FDO) may be output from the phase-difference detection pixel (PDPX) to read out the reset signal (R_LCG).

In the phase-difference detection period (SIG_P), when some transfer signals (LTG<1:0>) among the plurality of transfer signals (LTG<1:0>, RTG<3:2>), transition to a logic high level, the transfer transistors (LTX) may be turned on. As a result, photocharges accumulated in some photoelectric conversion elements (PD<1:0>) corresponding to the transfer transistors (LTX) among the plurality of photoelectric conversion elements (PD<3:0>) may be transferred to the floating diffusion region (FDO), and a pixel signal (PS) corresponding to the floating diffusion region (FDO) may be output. Accordingly, the phase-difference detection signal (S_LCG_L) may be read out. LCG phase-difference detection (LCG PD) data (illustrated as "LCG PDAF" in FIG. 5) may be read out based on a value corresponding to a voltage difference between the phase-difference detection signal (S_LCG_L) and the reset signal (R_LCG).

In the first signal period (SIG1) and the second signal period (SIG2), when the plurality of transfer signals (LTG<1:0>, RTG<3:2>) transitions to a logic high level, the plurality of transfer transistors (LTX, RTX) may be turned on. As a result, photocharges accumulated in the plurality of photoelectric conversion elements (PD<3:0>) may be transferred to the floating diffusion region (FDO), and a pixel signal (PS) corresponding to the floating diffusion region (FDO) may be output. Accordingly, in the second signal period (SIG2), an image signal (S_LCG_S) may be read out. In the LCG mode, LCG image data (illustrated as "LCG image" in FIG. 5) may be read out based on a value corresponding to a voltage difference between the image signal (S_LCG_S) and the reset signal (R_LCG).

As described above, the readout circuit 120 may read out phase-difference detection (PD) data ("LCG PDAF") according to the LCG mode and LCG image data ("LCG image") during the readout period based on a pixel signal (PS) received from the phase-difference detection pixel (PDPX) operating in the LCG mode.

The image sensing device according to the present disclosure may obtain high conversion gain (HCG) phase-difference detection (HCG PD) data ("HCG PDAF") through normal pixels (PX) of the pixel array 100. In addition, the image sensing device may read out LCG phase-difference detection (LCG PD) data ("LCG PDAF") by allocating a portion of the pixel array 100 to phase-difference detection pixels (PDPX). Accordingly, the image sensing device according to the present disclosure may acquire both HCG PD data ("HCG PDAF") and LCG PD data ("LCG PDAF") within a single scene, thereby acquiring full-range phase-difference detection autofocus (PDAF) data without degradation in speed and image quality.

In some embodiments, the low conversion gain (LCG) phase-difference detection (LCG PD) data ("LCG PDAF") and LCG image data ("LCG image") that have been read out by the readout circuit 120 may be transmitted to the image signal processor (ISP). LCG image data can be readout from both pixels (PX) and phase-detection detection pixels (PDPX). The image signal processor (ISP) may correct the HCG image data ("HCG image") using the LCG image data ("LCG image") to acquire an image without degradation in image quality. For example, the image signal processor (ISP) may correct the HCG image data ("HCG image") by multiplying the LCG image data ("LCG image") by a ratio of conversion gains.

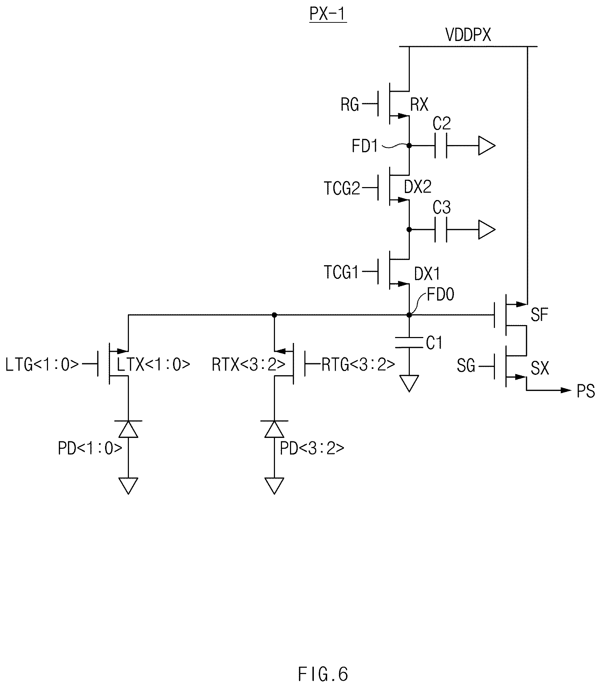

FIG. 6 is a circuit diagram illustrating another pixel included in the pixel array 100 shown in FIG. 2 according to an embodiment of the present disclosure.

Referring to FIG. 6, the pixel (PX-1) may include a plurality of photoelectric conversion elements (PD<3:0>), transfer transistors (TX) (e.g., LTX<1:0>, RTX<3:2>), a reset transistor (RX), a plurality of conversion gain transistors (DX1, DX2), a pixel capacitor (C1), conversion gain capacitors (C2, C3), a source follower transistor (SF), and a selection transistor (SX).

The embodiment of FIG. 6 illustrates only configurations different from those of FIG. 3 for convenience of description, and the same reference numerals as in FIG. 3 will be assigned to identical elements, and as such redundant descriptions thereof will herein be omitted for brevity.

Whereas the pixel (PX) illustrated in FIG. 3 includes a single conversion gain transistor (DX), the pixel (PX-1) of FIG. 6 may include at least two conversion gain transistors (DX1, DX2). The conversion gain transistors (DX1, DX2) may be connected in series between the floating diffusion region (FDO) and the floating diffusion region (FD1). The conversion gain transistor (DX1) may receive a conversion gain control signal (TCG1) through a gate terminal thereof. The conversion gain transistor (DX2) may receive a conversion gain control signal (TCG2) through a gate terminal thereof. The conversion gain capacitor (C3) may be connected between a common connection node of the two conversion gain transistors (DX1, DX2) and a ground voltage terminal.

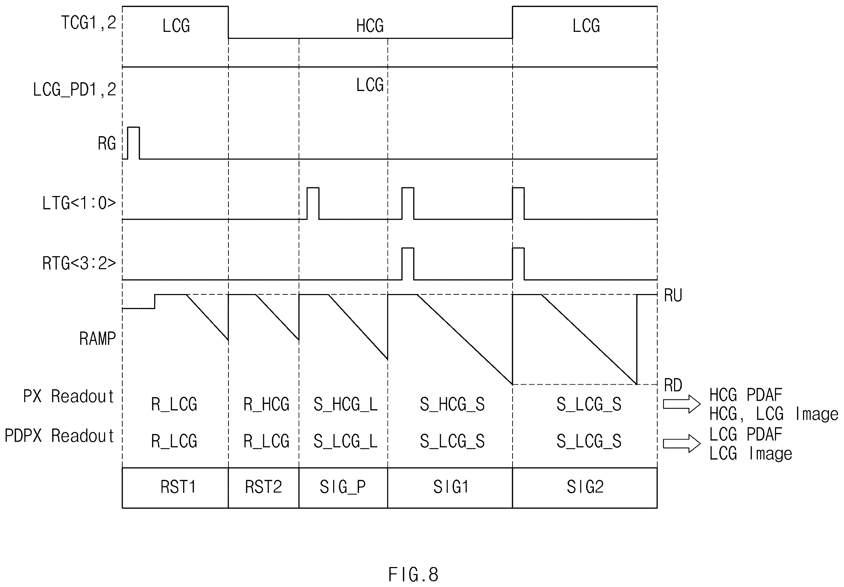

A method for operating the pixel (PX-1) including the above constituent elements will be described later in more detail with reference to FIG. 8.

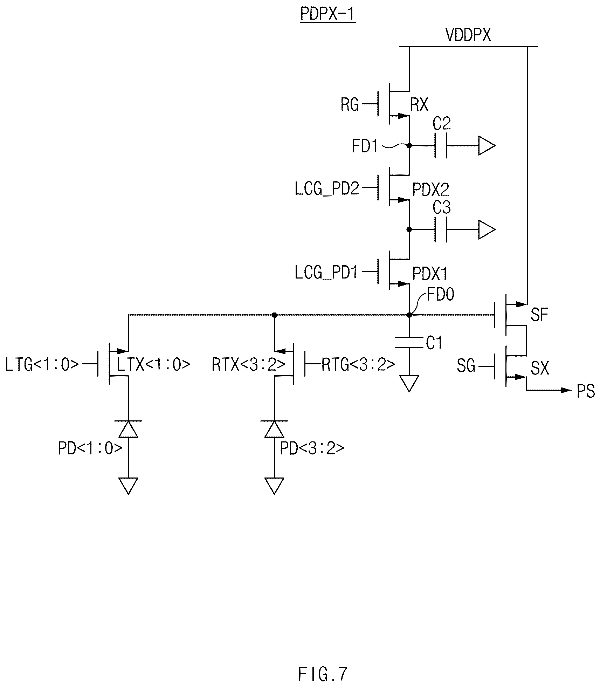

FIG. 7 is a circuit diagram illustrating a phase-difference detection pixel (PDPX-1) included in the pixel array shown in FIG. 2 according to another embodiment of the present disclosure.

Referring to FIG. 7, the phase-difference detection pixel (PDPX-1) may include a plurality of photoelectric conversion elements (PD<3:0>), transfer transistors (TX) (e.g., LTX<1:0>, RTX<3:2>), a reset transistor (RX), a plurality of LCG transistors (PDX1, PDX2), a pixel capacitor (C1), conversion gain capacitors (C2, C3), a source follower transistor (SF), and a selection transistor (SX).

The embodiment of FIG. 7 illustrates only configurations different from those of FIG. 6 for convenience of description, and the same reference numerals as in FIG. 6 will be assigned to identical elements, and as such redundant descriptions thereof will herein be omitted for brevity.

Whereas the pixel (PX-1) illustrated in FIG. 6 includes a plurality of conversion gain transistors (DX1, DX2), the phase-difference detection pixel (PDPX-1) of FIG. 7 may include a plurality of LCG transistors (PDX1, PDX2) instead of the plurality of conversion gain transistors (DX1, DX2).

The plurality of LCG transistors (PDX1, PDX2) may operate to read out LCG phase-difference detection (LCG PD) data and LCG image data in the LCG mode. The plurality of LCG transistors (PDX1, PDX2) may be connected in series between the floating diffusion region (FDO) and the floating diffusion region (FD1). The LCG transistor (PDX1) may receive an LCG mode signal (LCG_PD1) through a gate terminal thereof. The LCG transistor (PDX2) may receive an LCG mode signal (LCG_PD2) through a gate terminal thereof. In the LCG mode, the plurality of LCG transistors (PDX1, PDX2) may be configured such that the LCG mode signals (LCG_PD1, LCG_PD2) are fixed at a first logic level (e.g., a logic high level), and thus the LCG transistors (PDX1, PDX2) can remain turned on.

A method for operating the phase-difference detection pixel (PDPX-1) including the above constituent elements will be described later in more detail with reference to FIG. 8.

FIG. 8 is a timing diagram illustrating readout operations of pixels shown in FIGS. 6 and 7 according to another embodiment of the present disclosure.

Referring to FIG. 8, during the readout operation of the pixel (PX), the conversion gain transistors (DX1, DX2) may be turned on or off based on conversion gain control signals (TCG1, TCG2). Depending on the operations of the conversion gain transistors (DX1, DX2), the readout operation in the LCG mode or the readout operation in the HCG mode may be performed.

During the readout operation of the phase-difference detection pixel (PDPX-1), the LCG mode signals (LCG_PD1, LCG_PD2) may be fixed at a logic high level so that the LCG transistors (PDX1, PDX2) can remain turned on.

Other operations are the same as those described with reference to FIG. 5, and as such redundant description thereof will herein be omitted for brevity.

As is apparent from the above description, the image sensing device according to the embodiments of the present disclosure can acquire full-range phase detection autofocus (PDAF) data without degradation in speed and image quality.

The embodiments of the present disclosure may provide a variety of advantageous effects capable of being directly or indirectly recognized by one of ordinary skill in the art.

Although a number of illustrative embodiments have been described, it should be understood that modifications and enhancements to the disclosed embodiments and other embodiments can be devised based on what is described and/or illustrated in the present disclosure. Furthermore, the embodiments may be combined to form additional embodiments.

## Claims

1. An image sensing device comprising:
a pixel array including a plurality of pixels and a plurality of phase-difference detection pixels and configured to convert an optical signal into an electrical signal to output a pixel signal; and
a readout circuit configured to read out the pixel signal to output image data,
wherein the readout circuit is configured to perform a readout operation to:
in a first mode, read out high conversion gain (HCG) phase-difference detection (HCG PD) data, high conversion gain (HCG) image data, and low conversion gain (LCG) image data based on first pixel signals received from the plurality of pixels; and
in a second mode, read out low conversion gain (LCG) phase-difference detection (LCG PD) data and low conversion gain (LCG) image data based on second pixel signals received from the plurality of phase-difference detection pixels.

2. The image sensing device according to claim 1, wherein the readout circuit is configured to:
perform the readout operation in the first mode and the second mode within a single frame.

3. The image sensing device according to claim 1, wherein
the first mode is a dual conversion gain (DCG) mode including a high conversion gain (HCG) mode and a low conversion gain (LCG) mode.

4. The image sensing device according to claim 1, wherein
the second mode is a mode for reading out phase-difference detection autofocus (PDAF) data having a low conversion gain.

5. The image sensing device according to claim 1, wherein each of the plurality of pixels includes:
a plurality of photoelectric conversion elements configured to generate and accumulate photocharges corresponding to an intensity of incident light;
a plurality of transfer transistors connected between a first floating diffusion region and the plurality of photoelectric conversion elements;
a reset transistor connected between a power-supply voltage input terminal and a second floating diffusion region, and configured to operate by a reset signal;
at least one conversion gain transistor connected between the first floating diffusion region and the second floating diffusion region, and configured to operate by a conversion gain control signal;
a pixel capacitor connected between the first floating diffusion region and a ground voltage terminal;
a first conversion gain capacitor connected between the second floating diffusion region and the ground voltage terminal; and
a second conversion gain capacitor connected between a common node of the at least one conversion gain transistor and the ground voltage terminal.

6. The image sensing device according to claim 5, wherein the first mode includes:
a first reset period in which a low conversion gain (LCG) reset signal is read out from the plurality of pixels in a low conversion gain (LCG) mode;
a second reset period in which a high conversion gain (HCG) reset signal is read out from the plurality of pixels in a high conversion gain (HCG) mode;
a phase-difference detection period in which a high conversion gain (HCG) phase-difference detection (HCG PD) signal is read out from the plurality of pixels in the high conversion gain (HCG) mode;
a first signal period in which a high conversion gain (HCG) image signal is read out from the plurality of pixels in the high conversion gain (HCG) mode; and
a second signal period in which a low conversion gain (LCG) image signal is read out from the plurality of pixels in the low conversion gain (LCG) mode.

7. The image sensing device according to claim 6, wherein
one of the low conversion gain (LCG) mode and the high conversion gain (HCG) mode is selected based on an operation of the conversion gain transistor.

8. The image sensing device according to claim 6, wherein
in the phase-difference detection period, the HCG phase-difference detection (HCG PD) data is read out from the plurality of pixels based on a voltage difference between the HCG phase-difference detection (HCG PD) signal and the HCG reset signal.

9. The image sensing device according to claim 6, wherein
in the first signal period, the high conversion gain (HCG) image data is read out from the plurality of pixels based on a voltage difference between the HCG image signal and the HCG reset signal.

10. The image sensing device according to claim 6, wherein
in the second signal period, the low conversion gain (LCG) image data is read out from the plurality of pixels based on a voltage difference between the LCG image signal and the LCG reset signal.

11. The image sensing device according to claim 1, wherein each of the plurality of phase-difference detection pixels includes:
a plurality of photoelectric conversion elements configured to generate and accumulate photocharges corresponding to an intensity of incident light;
a plurality of transfer transistors connected between a first floating diffusion region and the plurality of photoelectric conversion elements;
a reset transistor connected between a power-supply voltage input terminal and a second floating diffusion region, and configured to operate by a reset signal;
at least one low conversion gain (LCG) transistor connected between the first floating diffusion region and the second floating diffusion region, and configured to operate by a low conversion gain (LCG) mode signal:
a pixel capacitor connected between the first floating diffusion region and a ground voltage terminal;
a first conversion gain capacitor connected between the second floating diffusion region and the ground voltage terminal; and
a second conversion gain capacitor connected between a common node of the at least one low conversion gain (LCG) transistor and the ground voltage terminal.

12. The image sensing device according to claim 11, wherein the second mode includes:
a reset period in which a low conversion gain (LCG) reset signal is read out from the plurality of phase-difference detection pixels in a low conversion gain (LCG) mode;
a phase-difference detection period in which a low conversion gain (LCG) phase-difference detection (LCG PD) signal is read out from the plurality of phase-difference detection pixels in the low conversion gain (LCG) mode; and
a signal period in which a low conversion gain (LCG) image signal is read out from the plurality of phase-difference detection pixels in the low conversion gain (LCG) mode.

13. The image sensing device according to claim 12, wherein
in the low conversion gain (LCG) mode, the LCG mode signal is fixed at a first logic level such that the at least one LCG transistor remains turned on.

14. The image sensing device according to claim 12, wherein
in the phase-difference detection period, the low conversion gain (LCG) phase-difference detection (LCG PD) data is read out from the plurality of phase-difference detection pixels based on a voltage difference between the LCG phase-difference detection (LCG PD) signal and the LCG reset signal.

15. The image sensing device according to claim 12, wherein
in the signal period, the low conversion gain (LCG) image data is read out from the plurality of phase-difference detection pixels based on a voltage difference between the LCG image signal and the LCG reset signal.
